# EUROPEAN PATENT APPLICATION

(11) **EP 2 495 184 A1**
(43) Date of publication of application: **05.09.2012**
(21) Application number: 12153695.7
(22) Date of filing: 02.02.2012
(51) Int. Cl.: B65D 5/48, E04C 2/42

(54) **A halving joint structure**

(30) Priority: 02.03.2011 GB 201103516
(71) Applicant: Rolls-Royce plc, London SW1E 6AT (GB)
(72) Inventor: Bishop, Jeffrey, Derby, Derbyshire DE65 6BU (GB)
(74) Representative: Tindall, Adam

(57) **Abstract**

A halving joint structure comprising: a first member (2) and a second member (4) couplable to one another in a nonparallel arrangement by a halving joint, wherein each of the first and second members (2, 4) has a joint slot (6a, 6b) for receiving a portion (14a, 14b) of the other of the first and second members (2, 4) to form the halving joint; wherein the first and second members (2, 4) have cooperating locking slots (12a, 12b), the locking slot (12a) of the first member (2) intersecting the joint slot (6a) of the first member (2), and the locking slot (12b) of the second member (4) being formed in the portion (14b) of the second member (4) which is received by the joint slot (6a) of the first member (2); the structure further comprising: a locking member (16) which is receivable within the locking slots (12a, 12b) of the first and second members (2, 4).

## Description

The present invention relates to a halving joint structure, and particularly, but not exclusively, to a halving joint structure which improves the strength and rigidity of the joint.

### Background

A conventional halving joint is created by forming a slot in opposite edges of a first member and a second member, which are to be joined. Commonly, the slots formed in the first and second member are of equal length and the slots extend half of the way through the thickness of each member. However, if the members are of differing thicknesses, only one of the slots may extend half of the way through the thickness of the member.

The two members are arranged perpendicularly and the slot of one member is introduced into the slot of the other member until a bottom surface of the slot of the first member contacts a bottom surface of the slot of the second member. This forms an overlapping interconnection between the two members. Where the slots of the first and second members are of equal length and extend half of the way through the thickness of each member, the edges of the first and second members align to form a continuous connection.

The conventional halving joint is simple to manufacture and assemble, and is therefore widely used. The conventional halving joint is usually created with wooden members, but can also be formed from cardboard, plastic or metal members (particularly sheet metal). A plurality of members each having a plurality of slots can be used to form a grid-type arrangement. This is particularly useful for forming compartments, for example, for packaging.

However, the conventional halving joint is relatively weak and the first and second members may become misaligned easily. Furthermore, the joint can be easily separated, which in certain applications is undesirable. Where the members are formed from metal, this can be prevented by welding the first and second members together. However, welding causes distortion of the members, and also increases the cost and lead-time of the component. Furthermore, it is then not possible to separate the joint if desired. Alternatively, the first and second members may be connected using rivets or bolts. Rivets provide a semi-permanent connection but they add significantly to the parts-count of the component and again increase the cost and lead-time of the component. Although bolts provide a disassemblable connection, they also increase the parts-count, cost and lead-time of the component.

The present invention seeks to provide a halving joint structure which solves some or all of the problems associated with the conventional halving joint described above.

### Statements of Invention

In accordance with an aspect of the invention, there is provided a halving joint structure comprising: a first member and a second member couplable to one another in a nonparallel arrangement by a halving joint, wherein each of the first and second members has a joint slot for receiving a portion of the other of the first and second members to form the halving joint; wherein the first and second members have cooperating locking slots, the locking slot of the first member intersecting the joint slot of the first member, and the locking slot of the second member being formed in the portion of the second member which is received by the joint slot of the first member; the structure further comprising: a locking member which is receivable within the locking slots of the first and second members.

The halving joint structure in accordance with the present invention increases the parts-count by just one part, the locking member. The locking member may be a simple component which can be lightweight and may be easily assembled and disassembled. Furthermore, the locking member may be formed using the same processes as used for the first and second members (eg laser cutting) and the halving joint structure may not require any further preparation before assembly. Consequently, the present invention does not add significantly to the cost and lead-time of the halving joint structure.

The locking slots of the first and second members may lie in the same plane when the first and second members are coupled to one another.

The locking slot of the first member may be perpendicular to the joint slot.

The locking member may be a locking plate.

The locking member may have a retaining portion which may be movable between a first configuration which allows the locking member to be received within the locking slots of the first and second members and a second configuration which prevents the locking member from being withdrawn from the locking slots of the first and second members.

The retaining portion may lie in the plane of the locking slots when in the first configuration and may be out of the plane of the locking slots when in the second configuration.

The retaining portion may be deformable between the first and second configurations.

The retaining portion may be bendable between the first and second configurations.

The retaining portion may comprise a pair of bendable retaining arms.

The locking member may comprise a head portion.

The head portion may have an extraction hole. The extraction hole may provide an attachment point for gripping the locking member to aid in removing the locking member from the locking slots.

The locking member may be adapted to maintain the nonparallel arrangement of the first and second members.

The head portion may be sized to maintain the nonparallel arrangement of the first and second members.

The retaining portion may be sized to maintain the nonparallel arrangement of the first and second members.

The retaining portion may be sized to maintain the nonparallel arrangement of the first and second members when in the second configuration.

The first member, second member, and/or locking member may be metal.

The first member, second member, and/or locking member may be formed from sheet metal.

The first and second members may have additional cooperating locking slots, the additional locking slot of the second member intersecting the joint slot of the second member, and the additional locking slot of the first member being formed in the portion of the first member which is received by the joint slot of the second member; and the structure may further comprise: an additional locking member which is receivable within the additional locking slots of the first and second members.

In accordance with another aspect of the invention, there is provided a locking member for a halving joint structure comprising a first member and a second member couplable to one another in a nonparallel arrangement by a halving joint, wherein each of the first and second members has a joint slot for receiving a portion of the other of the first and second members to form the halving joint; wherein the first and second members have cooperating locking slots, the locking slot of the first member intersecting the joint slot of the first member, and the locking slot of the second member being formed in the portion of the second member which is received by the joint slot of the first member; wherein the locking member is adapted to be received within the locking slots of the first and second members.

In accordance with another aspect of the invention, there is provided a method of assembling a halving joint structure, the method comprising: providing a first member and a second member, each having a slot for receiving a portion of the other of the first and second members; wherein the first and second members have cooperating locking slots, the locking slot of the first member intersecting the joint slot of the first member, and the locking slot of the second member being formed in the portion of the second member which is received by the joint slot of the first member; inserting the portion of the first or second member into the slot of the other of the first and second members to form a halving joint, with the first and second members in a nonparallel arrangement; and inserting a locking member into the locking slots of the first and second members.

The method may further comprise moving a retaining portion of the locking member from a first configuration which allows the locking member to be received within the locking slots of the first and second members to a second configuration which prevents the locking member from being withdrawn from the locking slots of the first and second members.

### Brief Description of the Drawings

For a better understanding of the present invention, and to show more clearly how it may be carried into effect, reference will now be made, by way of example, to the accompanying drawings, in which:
Figure 1 is a perspective view of a halving joint structure according to an embodiment of the invention, prior to assembly;
Figure 2 is a top view of a locking member of the halving joint structure;
Figure 3 is a perspective view of the assembled halving joint structure;
Figure 4 is a perspective view of the assembled halving joint structure showing the locking member in a first unlocked configuration; and
Figure 5 is a perspective view of the assembled halving joint structure showing the locking member in a second locked configuration.

### Detailed Description

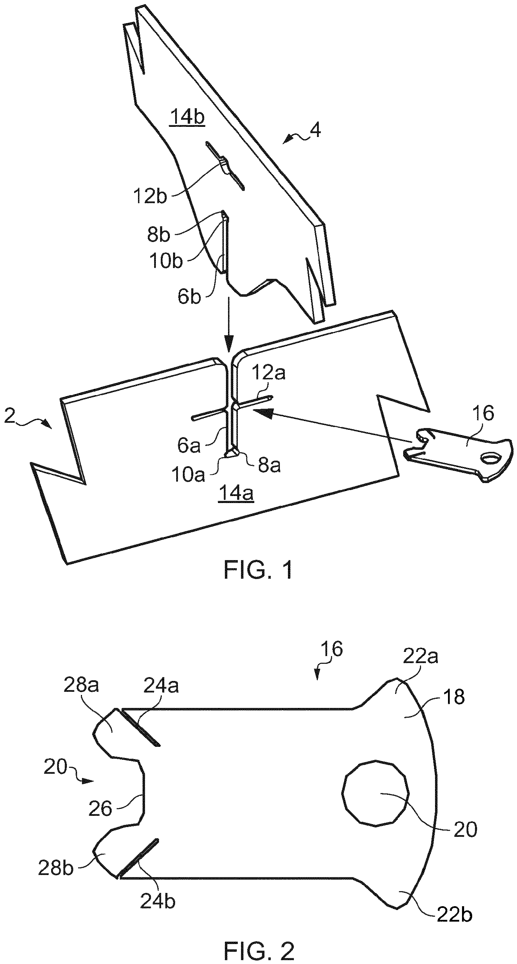

With reference to Figure 1, a halving joint structure according to embodiment of the invention is formed by a first member 2 and a second member 4. The first and second members 2, 4 are constructed from sheet metal.

A joint slot 6a is formed in the first member 2 and a joint slot 6b is formed in the second member 4. The joint slots 6a, 6b extend perpendicularly from opposite edges of the first and second members 2, 4. The joint slots 6a, 6b of the first and second members 2, 4 widen at a bottom end to form a bulbous portion 8a, 8b having a flat bottom surface 10a, 10b.

A locking slot 12a is formed in the first member 2. The locking slot 12a of the first member 2 is located along the length of the joint slot 6a and extends perpendicularly to the joint slot 6a. The locking slot 12a is arranged so that the joint slot 6a is at its centre. Accordingly, the joint slot 6a and locking slot 12a are in the shape of a cruciform.

The second member 4 is also provided with a locking slot 12b. Unlike the locking slot 12a of the first member 2, the locking slot 12b of the second member 4 is remote from the joint slot 6b and is located in a portion 14b between the bottom surface 10b of the joint slot 6b and an opposite edge of the second member 4.

As indicated in Figure 1, the first member 2 and second member 4 are introduced to one another with the first member 2 arranged perpendicularly to the second member 4 (ie rotated 90 degrees about an axis running along the joint slot 6a). The first and second members 2, 4 are urged towards one another with the joint slots 6a, 6b in alignment until the bottom surface 10a of the slot 6a of the first member 2 contacts the bottom surface 10b of the slot 6b of the second member 4. Accordingly, the portion 14b of the second member is received within the joint slot 6a of the first member 2 and a corresponding portion 14a of the first member 2 is received within the joint slot 6b of the second member 4.

In this position, the locking slots 12a, 12b of the first and second members are located so that they are aligned and lie in the same plane. Consequently, the locking slots 12a, 12b are arranged so as to allow a locking member 16 to pass through the locking slots 12a, 12b.

As shown in Figure 2, the locking member 16 is a flat elongate plate of sheet metal which comprises a head portion 18 at one end and a retaining portion 20 at the other end.

The head portion 18 of the locking member 16 comprises an extraction hole 20 which passes through the head portion 18. The head portion 18 further comprises a pair of shoulders 22a, 22b on either side of the head portion 18, and which are separated from one another by the extraction hole 20. The shoulders 22a, 22b protrude from the locking member 16 and define the head portion 18, which is wider than the remainder of the locking member 16.

The retaining portion 20 of the locking member 16 comprises a pair of slits 24a, 24b which extend from either side of the retaining portion 20 into the body of the locking member 16. The slits 24a, 24b are angled towards the head portion 18. The slits 24a, 24b are separated by an indentation 26 which is formed in the retaining portion 20 and extends towards the head portion 18 of the locking member 16. The indentation 26 defines a pair of retaining arms 28a, 28b located on either side of the indentation 26. The retaining arms 28a, 28b are separated from the remainder of the locking member 16 by the slits 24a, 24b. This allows the retaining arms 28a, 28b to be bent out of the plane of the remainder of the locking member 16, as will be described in further detail below.

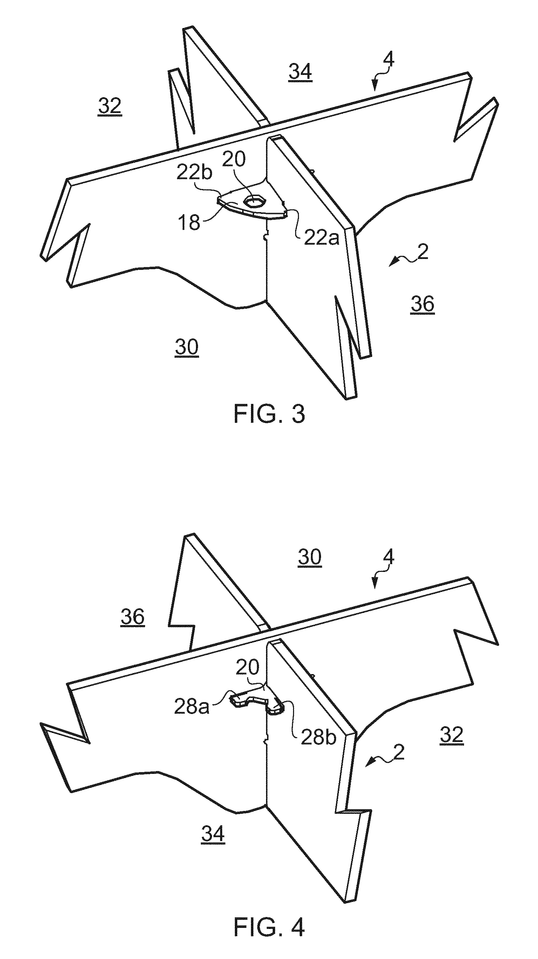

As shown in Figure 3, when the bottom surfaces 10a, 10b contact one another, the edges of the first and second members 2, 4 are in alignment.

The coupled first and second members 2, 4 define four quadrants 30, 32, 34, 36 and the slots 12a, 12b define a passage through the first and second members 2, 4 from one of the four quadrants to an opposite quadrant i.e. from quadrant 30 to quadrant 34, for example. The width of the passage through the first and second members 2, 4 is defined by the distance across a quadrant from an edge of the locking slot 12a of the first member 2 to an edge of the locking slot 12b of the second member 4. Accordingly, where the first and second members 2, 4 are in a perpendicular arrangement, the width of the passage is equal to the hypotenuse of a triangle having two other sides which have a length that is approximately equal to half of the length of the locking slots 12a, 12b.

The locking member 16 is passed from the quadrant 30, through the locking slots 12a, 12b with the retaining portion 20 leading, until the shoulders 22a, 22b of the head portion 18 contact the first and second members 2, 4 respectively in the quadrant 30. The shoulders 22a, 22b of the head portion 18 contact the first and second members 2, 4 and thus maintain the angle between the first and second members 2, 4.

The width of the locking member 16 is such that it is just narrower than the width of the passage through the first and second members 2, 4. Furthermore, the length of the locking member 16 is such that, with the shoulders 22a, 22b contacting the first and second members 2, 4 in the quadrant 30, the slits 24a, 24b and the retaining arms 28a, 28b protrude into the opposite quadrant 34, as shown in Figure 4.

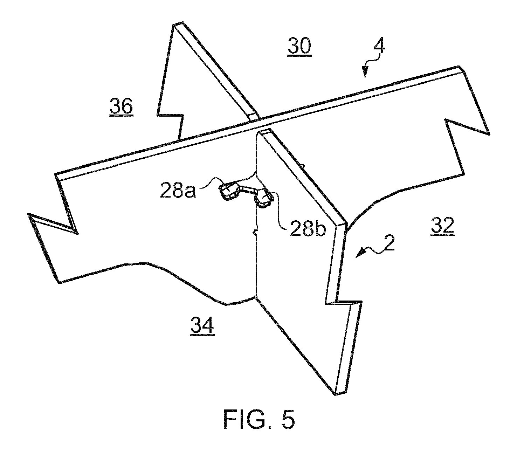

As shown in Figure 5, once the locking member 16 is received in the locking slots 12a, 12b, the retaining arms 28a, 28b are bent down from the first unlocked configuration where they lie in the plane of the remainder to a second locked configuration where the retaining arms 28a, 28b are out of the plane of the remainder of the locking member 16 and, more importantly, out of the plane of the locking slots 12a, 12b. This prevents the locking member 16 from being withdrawn from the locking slots 12a, 12b. In the second locked configuration the retaining arms 28b, 28a contact the first and second members 2, 4 respectively in the opposite quadrant 34. Similarly to the shoulders 22a, 22b of the head portion 18, the retaining arms 28a, 28b contacting the first and second members 2, 4 helps to maintain the angle between the first and second members 2, 4.

To remove locking member 16, the retaining arms 28a, 28b must be first bent from the second locked configuration back to the first unlocked configuration so that the retaining arms again lie in the plane of the locking slots 12a, 12b. The locking member 16 may then be pulled out of the locking slots 12a, 12b using the extraction hole 20. This allows the first and second members 2, 4 to be separated from one another when desired. The retaining arms 28a, 28b may move from the first unlocked configuration to the second locked configuration and back to the first unlocked configuration many times.

Although the retaining arms 28a, 28b of the locking member 16 have been described and shown as being bent down from the plane of the remainder of the locking member 16, they could alternatively be bent up from this plane. Furthermore, each retaining arm 28a, 28b could be bifurcated (akin to a split pin) to allow the retaining arms 28a, 28b to be bent both up and down.

Furthermore, the retaining portion 20 may prevent the locking member 16 from being withdrawn from the locking slots 12a, 12b using alternative means. For example, the retaining portion 20 could have a portion which is twisted (ie about a longitudinal axis of the locking member 16) out of the plane of the locking slots 12a, 12b or which is pivoted out of the plane of the locking slots 12a, 12b and locked in position. Further still, the locking member 16 may have a portion which is deformed once the locking member 16 is inserted so that it is larger than the passage defined by the locking slots 12a, 12b.

Although only one pair of locking slots 12a, 12b has been described, further locking slots may be provided on the first and second members 2, 4. For example, the first and second members 2, 4 may be provided with an additional pair of locking slots. The additional locking slots may be identical to the locking slots 12a, 12b but in the reversed configuration, whereby the additional locking slot of the first member is located in the portion 14a and the additional locking slot of the second member 4 is located along the length of the joint slot 6b. An additional locking member 16 is provided which is received in the additional locking slots of the first and second members 2, 4. Consequently, with this arrangement the first and second members 2, 4 are identical. Furthermore, each of the first and second members 2, 4 may comprise a plurality of joint slots 6a, 6b, locking slots 12a, 12b and locking members 16 so as to allow the first and second members 2, 4 to form multiple halving joints with other members. This allows a grid-type arrangement to be formed.

The first and second members 2, 4 do not necessarily need to be arranged perpendicularly to one another. The first and second members 2, 4 may be joined in any nonparallel arrangement. Furthermore, the locking slot 12a of the first member need not be perpendicular to the joint slot 6a of the first member. However, the locking slot 12a of the first member 2 must be angled with respect to joint slot 6a of the first member 2. Further still, although the locking slots 12a, 12b of the first and second members 2, 4 have been described as lying in the same plane when the first and second members 2, 4 are coupled to one another, this need not be the case. For example, the locking slots 12a, 12b may be arcuate and receive a similarly arcuate locking member 16. In this case, the locking slots 12a, 12b of the first and second members 2, 4 lie on a curved surface when the first and second members 2, 4 are coupled to one another. However, when the first and second members 2, 4 are coupled to one another, the locking slots 12a, 12b must be configured so as to allow a suitable locking member 16 to be received within the locking slots 12a, 12b, thereby locking the first and second members 2, 4 together.

Although the first and second members 2, 4 have been described as being constructed from sheet metal, they could be formed from alternative materials. Furthermore, where the base material of the locking member 16 is unsuitable for forming the retaining arms 28a, 28b, metal (or other suitable material) retaining arms may be joined to the locking member 16.

The halving joint structure of the present invention may find particular applications in the aerospace industry. For example, the halving joint structure may be used to form ducts or other sheet metal structures. The halving joint structure of the present invention may be particularly useful for circular components.

## Claims

1. A halving joint structure comprising:
a first member and a second member couplable to one another in a nonparallel arrangement by a halving joint, wherein each of the first and second members has a joint slot for receiving a portion of the other of the first and second members to form the halving joint;
wherein the first and second members have cooperating locking slots, the locking slot of the first member intersecting the joint slot of the first member, and
the locking slot of the second member being formed in the portion of the second member which is received by the joint slot of the first member;
the structure further comprising:
a locking member which is receivable within the locking slots of the first and second members
wherein the locking member is a locking plate.

2. A halving joint structure as claimed in claim 1, wherein the locking slots of the first and second members lie in the same plane when the first and second members are coupled to one another.

3. A halving joint structure as claimed in claim 1 or 2, wherein the locking slot of the first member is perpendicular to the joint slot.

4. A halving joint structure as claimed in any one of the preceding claims, wherein the locking member has a retaining portion which is movable between a first configuration which allows the locking member to be received within the locking slots of the first and second members and a second configuration which prevents the locking member from being withdrawn from the locking slots of the first and second members.

5. A halving joint structure as claimed in claim 4, wherein the retaining portion lies in the plane of the locking slots when in the first configuration and is out of the plane of the locking slots when in the second configuration.

6. A halving joint structure as claimed in claim 5, wherein the retaining portion is deformable between the first and second configurations.

7. A halving joint structure as claimed in claim 6, wherein the retaining portion is bendable between the first and second configurations.

8. A halving joint structure as claimed in claim 7, wherein the retaining portion comprises a pair of bendable retaining arms.

9. A halving joint structure as claimed in any one of the preceding claims, wherein the locking member comprises a head portion.

10. A halving joint structure as claimed in claim 9, wherein the head portion has an extraction hole.

11. A halving joint structure as claimed in any one of the preceding claims, wherein the locking member is adapted to maintain the nonparallel arrangement of the first and second members.

12. A halving joint structure as claimed in any one of the preceding claims, wherein the first and second members have additional cooperating locking slots, the additional locking slot of the second member intersecting the joint slot of the second member, and the additional locking slot of the first member being formed in the portion of the first member which is received by the joint slot of the second member;
and wherein the structure further comprises:
an additional locking member which is receivable within the additional locking slots of the first and second members.

13. A locking member for a halving joint structure comprising a first member and a second member couplable to one another in a nonparallel arrangement by a halving joint, wherein each of the first and second members has a joint slot for receiving a portion of the other of the first and second members to form the halving joint;
wherein the first and second members have cooperating locking slots, the locking slot of the first member intersecting the joint slot of the first member, and the locking slot of the second member being formed in the portion of the second member which is received by the joint slot of the first member;
wherein the locking member is adapted to be received within the locking slots of the first and second members.

14. A method of assembling a halving joint structure, the method comprising:
providing a first member and a second member, each having a slot for receiving a portion of the other of the first and second members;
wherein the first and second members have cooperating locking slots, the locking slot of the first member intersecting the joint slot of the first member, and
the locking slot of the second member being formed in the portion of the second member which is received by the joint slot of the first member;
inserting the portion of the first or second member into the slot of the other of the first and second members to form a halving joint, with the first and second members in a nonparallel arrangement; and
inserting a locking member into the locking slots of the first and second members.

15. A method as claimed in claim 14, the method further comprising moving a retaining portion of the locking member from a first configuration which allows the locking member to be received within the locking slots of the first and second members to a second configuration which prevents the locking member from being withdrawn from the locking slots of the first and second members.
